Europäisches Patentamt

European Patent Office

Office européen des brevets

(19)

(11) Numéro de publication: **0 074 508**
**B1**

(12) **FASCICULE DE BREVET EUROPEEN**

(45) Date de publication du fascicule du brevet:
31.07.85

(51) Int. Cl.⁴: **F 16 K 47/04**, F 01 D 17/14

(21) Numéro de dépôt: 82107580.1

(22) Date de dépôt: 19.08.82

(54) Soupape de réglage de débit de fluide gazeux.

(30) Priorité: 25.08.81 FR 8116204

(43) Date de publication de la demande:
23.03.83 Bulletin 83/12

(45) Mention de la délivrance du brevet:
31.07.85 Bulletin 85/31

(84) Etats contractants désignés:
AT BE CH DE FR GB IT LI LU NL SE

(56) Documents cités:
EP - A - 0 023 172
FR - A - 1 292 129
GB - A - 694 919
US - A - 1 752 439
US - A - 2 091 669

(73) Titulaire: ALSTHOM-ATLANTIQUE Société anonyme
dite:, 38, Avenue Kléber, F-75784 Paris Cédex 16 (FR)

(72) Inventeur: Riollet, Gilbert, 11, rue du Cherche-Midi,
F-75006 Paris (FR)
Inventeur: Bessay, Raymond, 8, rue de Stockholm,
F-90000 Belfort (FR)

(74) Mandataire: Weinmiller, Jürgen et al, Zeppelinstrasse 63,
D-8000 München 80 (DE)

BUNDESDRUCKEREI BERLIN

## Description

La présente invention a trait à une soupage de réglage de débit de fluide gazeux correspondant au préambule de la revendication 1 et connue du EP-A-23 172.

De telles soupapes sont utilisées pour régler le débit de fluide dans toute la gamme de 0 à 100%.

C'est pourquoi la pression de sortie P1 peut varier par rapport à la pression d'entrée Po dans un rapport allant de 0 à 1.

Par suite, dans la zone des débits faibles, l'écoulement dans la soupape est supersonique. Pour une certaine levée du clapet, il est tout juste sonique. Au-delà, il devient subsonique.

Pour l'ensemble de ces régimes, il existe de nombreux efforts instationnaires et non symétriques d'excitation du clapet susceptibles d'amener, en cas de résonance, des ruptures d'organes. Les efforts proviennent notamment des décollements périodiques de jets s'appuyant tantôt sur les parties fixes, tantôt sur le clapet, des ondes de choc de recompression s'accrochant sur le clapet, des décollements instables dus à des courbures locales ou à des divergences de veine trop accentuées.

La présente invention, telle qu'elle st caractérisée dans la revendication 1, permet de minimiser les efforts instationnaires sur le clapet dans toute la gamme des levées tout en assurant un faible niveau de pertes de charge à pleine ouverture, c'est-à-dire pendant le fonctionnement normal de l'installation.

Ainsi, les instabilités de l'écoulement aux différentes levées engendrent des efforts dont la majorité est supportée par le bouclier qui peut être fixé aussi rigidement que nécessaire, alors que le clapet dont la rigidité mécanique n'est jamais grande à cause de son axe n'encaisse que peu d'efforts, hormis sur la faible portion latérale dépassant du logement. La fixation du bouclier au logement par des bras intérieurs audit logement ne vient pas perturber l'écoulement de fluide et ne cause aucune perte de charge.

Selon une réalisation préférentielle de l'invention permettant de minimiser les pertes de charge à pleine ouverture, la face avant du bouclier a une forme aérodynamique prolongeant la partie avant du logement et la face avant du clapet.

L'invention va maintenant être décrite plus en détail en se référant à deux modes de réalisation particuliers cités à titre d'exemples non limitatifs représentés par des dessins annexés.

La figure 1 représente un premier mode de réalisation de la soupape selon l'invention.

La figure 2 représente un second mode de réalisation de la soupape selon l'invention.

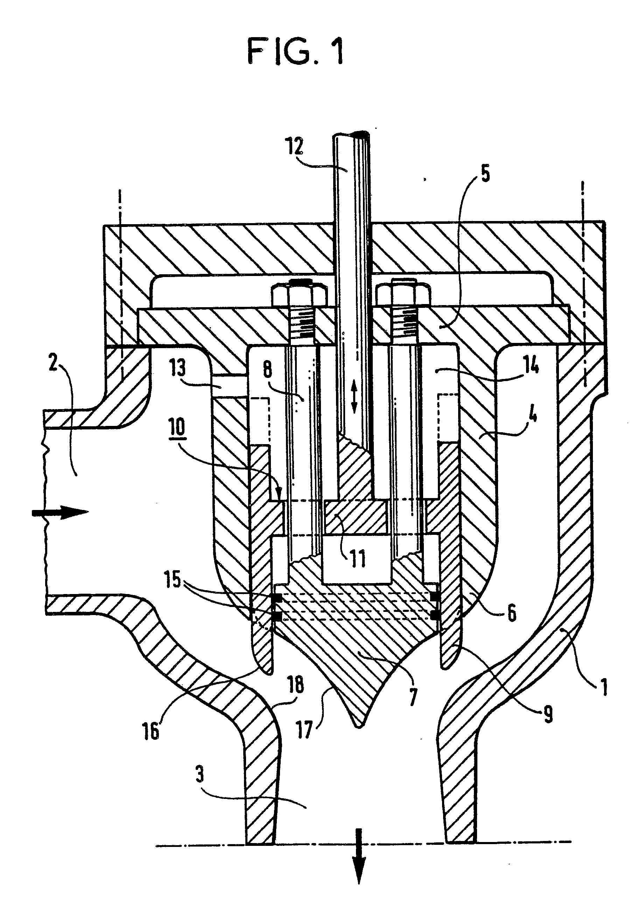

La soupape représentée à la figure 1 comporte un corps 1 comprenant une entrée latérale de fluide gazeux 2 et une sortie de fluide 3, l'axe de l'entrée 2 étant perpendiculaire à l'axe de la sortie 3.

A l'intérieur du corps 1 est prévu un logement cylindrique 4 terminé par une plaque 5 fixée dans le corps 1 en dehors de l'écoulement entre entrée 2 et sortie 3. Ainsi le pourtour de la plaque 5 qui sert de moyens de fixations ne perturbe pas l'écoulement de fluide et ne cause aucune perte de charge.

La partie avant 6 du logement 4 en regard de la sortie 3 est prolongée par un bouclier 7 relié par des tiges rigides 8 à la plaque 5. Entre la partie avant 6 du logement 4 et le bouclier 7 se trouve un espace annulaire par lequel passe la partie avant 9 d'un clapet 10. Cette partie avant a la forme d'un cylindre creux. Le clapet 10 comporte une plaque centrale 11 percée pour laisser passer les tiges 8 et reliée en son centre à un axe 12 qui sort du corps 1 et qui est relié à des moyens de manœuvre (vérin ou autre) non représentés.

Le clapet 10, le bouclier 7 et le logement 4 sont sensiblement symétriques autour d'un axe vertical, qui est également l'axe de symétrie de la sortie 3.

La paroi du logement 4 est percée à sa partie supérieure d'ouvertures 13 qui mettent la partie supérieure interne 14 du logement 4 audessus du clapet 10 à une pression voisine de la pression Po à l'entrée 2.

Entre le bouclier 7 et la partie interne de la partie avant cylindrique 9 du clapet 10 sont disposés des moyens d'étanchéité 15.

Grâce à ces moyens, les fuites de fluide de l'intérieur du logement vers la sortie 3 à la pression P1 sont inférieures au débit de fluide pouvant entrer par les ouvertures 13.

La face avant 16 du clapet 10 lorsqu'il est en position haute (ouverture) forme avec la face avant 17 du bouclier 7 et la partie avant 6 du logement 4 une surface aérodynamique, en regard de la partie voisine du corps voisin de la sortie. On choisit cette forme de façon que les pertes de charge à pleine ouverture soient minimales (sans se préoccuper des incidences sur la stabilité du clapet aux autres régimes de marche que le régime normal).

Lorsque le clapet est en position basse (fermeture), il s'appuie sur un siège 18 et bloque toute sortie de fluide, la pression de sortie est alors nulle.

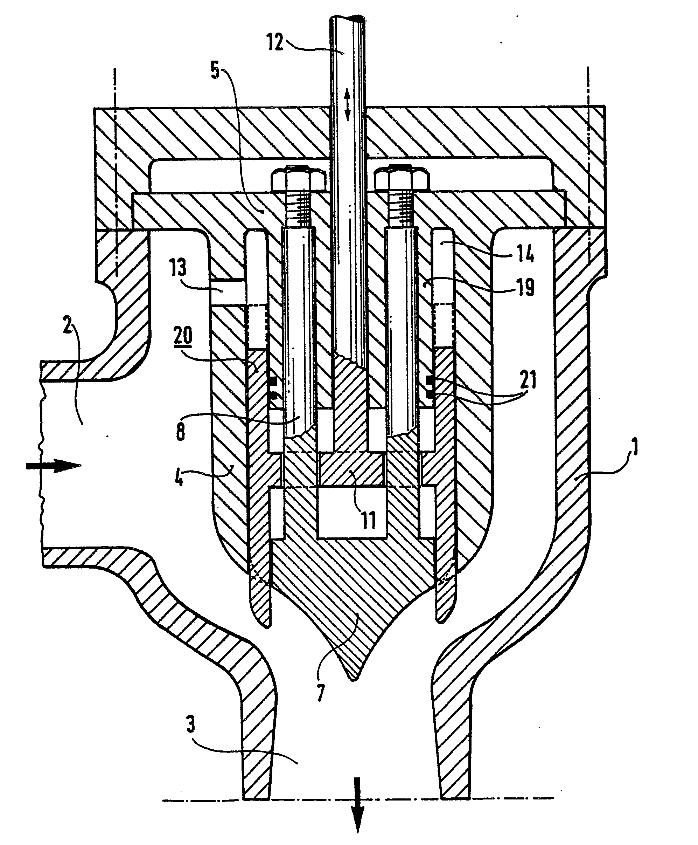

Dans la figure 2, les éléments de la soupape semblables à ceux de la figure 1 sont repris par les mêmes références.

A l'intérieur du logement 4 en-dessous de la plaque 5 est disposé un cylindre plein 19 traversé uniquement par les tiges 8 de fixation du bouclier 7 et l'axe mobile du clapet. La partie 20 du clapet 10 en forme de cylindre creux situé au-dessus de la plaque 11 du clapet est comprise entre la paroi interne du logement 4 et la paroi externe du cylindre 19. Sur ce cylindre 19, on a disposé des moyens d'étanchéité 21 de façon que la pression dans la partie supérieure 14 du logement 4 alimentée par les ouvertures 13 se maintienne à la pression Po.

En maintenant la pression dans la partie supérieure 14 du logement 4 à Po, on peut relâcher tout effort sur l'axe 12 lorsque le clapet est fermé car la différence de pression au-dessus et en-dessous du clapet 10 est alors de Po (aux fuites près). Par ailleurs dans le volume compris entre le bouclier 7 et le clapet 10 en raison de la présence des moyens d'étanchéité 21 et du faible jeu existant entre le bouclier 7 et le clapet 10 le fluide n'est pas agité.

### Revendications

1. Soupape de réglage de débit de fluide gazeux comportant un corps (1) muni d'une sortie (3) de fluide et d'une entrée latérale (2) par rapport à l'axe de la sortie (3), un clapet obturateur (10) de forme externe cylindrique qui est muni d'une tige (12) actionnée par des moyens de manœuvre selon à l'axe de la sortie (3) et qui est monté coulissant à l'intérieur d'un logement (4) cylindrique fixé au corps (1) par une plaque (5) faisant partie du chapeau de la soupape de réglage et située en dehors de l'écoulement du fluide entre l'entrée (2) et la sortie (3), ledit clapet (10) comporte une partie avant (9) qui a la forme d'un cylindre borgne et qui vient s'appliquer par sa face avant (16) sur un siège (18), bloquant ainsi ladite sortie (3), et une partie arrière se déplaçant à l'intérieur du logement (4) soumise à une pression de l'ordre de la pression Po du fluide à l'entrée (2), caractérisée en ce que la partie avant (9) du clapet (10) entoure avec un faible jeu un bouclier (7) qui est fixé au logement (4) de manière coaxiale par des bras rigides situés à (8) l'intérieur audit logement (4).

2. Soupape selon la revendication 1, caractérisée en ce que la face avant (17) du bouclier (7) a une forme aérodynamique prolongeant la partie avant (6) du logement (4) et la face avant (16) du clapet (10).

### Patentansprüche

1. Regelventil für den Durchsatz eines gasförmigen Fluids, das einen Körper (1) mit einem Fluidausgang (3) und einem Eingang (2) seitlich in bezug auf die Achse des Ausgangs (3), eine Verschlußklappe (10) von zylindrischer Außenform, die mit einer Stange (12) versehen ist, welche den Betätigungsmitteln entlang der Ausgangsachse (3) betätigt wird und die gleitend im Inneren eines zylindrischen Gehäuses (4) angeordnet ist, das am Körper (1) durch eine Platte (5) befestigt ist, die Teil des Regelventil-Deckels ist und sich außerhalb der Fluidströmung zwischen dem Eingang (2) und dem Ausgang (3) befindet, aufweist, wobei die Klappe (10) einen vorderen Teil (9), der die Form eines einseitig verschlossenen Zylinders hat und der mit seiner Vorderseite (16) auf einem Sitz (18) aufliegt, und so den Ausgang (3) sperrt, und einen hinteren Teil aufweist, der sich im Inneren des Gehäuses (4) bewegt und einem Druck von der Größenordnung des Drucks Po des Fluids am Eingang (2) unterworfen ist, dadurch gekennzeichnet, daß der vordere Teil (9) der Klappe (10) mit geringem Spiel einen Schild (7) umgibt, der am Gehäuse (4) koaxial durch starre Arme (8) befestigt ist, die sich innerhalb des Gehäuses (4) befinden.

2. Ventil nach Anspruch 1, dadurch gekennzeichnet, daß die Vorderseite des Schilds (7) eine aerodynamische Form hat, die den vorderen Teil (6) des Gehäuses (4) und die Vorderseite (16) der Klappe (10) verlängert.

### Claims

1. A valve for adjusting the flow rate of a gaseous fluid, comprising a body (1) with a fluid outlet (3) and an inlet (2) which is lateral with respect to the outlet (3) axis, an obturator flap (10) of cylindrical outer form which is supplied with a stem (12) actuated by operating means according to the outlet (3) axis and which is slidlingly mounted inside a cylindrical housing (4) fixed to the body (1) by means of a plate (5) which is part of the cap of the adjusting valve and which is situated beyond the fluid flow between the inlet (2) and the outlet (3), said flap (10) comprises a front part (9) which has the form of a unilaterally closed cylinder and which is applied by its front face (16) against a seat (18), thus blocking said outlet (3), and a rear part moving within the housing (4) and submitted to a pressure similar to the pressure Po of the fluid at the inlet (2), characterized in that the front part (9) of the flap (10) surrounds with a small clearance a nose-piece (7) which is fixed to the housing (4) in a coaxial manner by rigid arms (8) situated inside said housing (4).

2. A valve according to claim 1, characterized in that the front face (17) of the nose-piece (7) is aerodynamically shaped and extends the front part (6) of the housing (4) and the front face (16) of the flap (10).

# FIG. 1